(19) Europäisches Patentamt
European Patent Office
Office européen des brevets

(11) **EP 1 234 166 B1**

(12) **FASCICULE DE BREVET EUROPEEN**

(45) Date de publication et mention
de la délivrance du brevet:
**12.11.2008 Bulletin 2008/46**

(51) Int Cl.:
***G01N 19/02*** *(2006.01)*     ***G21C 17/10*** *(2006.01)*
***G21C 7/36*** *(2006.01)*

(21) Numéro de dépôt: **00985354.0**

(22) Date de dépôt: **29.11.2000**

(86) Numéro de dépôt international:
**PCT/FR2000/003331**

(87) Numéro de publication internationale:
**WO 2001/040768 (07.06.2001 Gazette 2001/23)**

(54) **METHODE DE DETERMINATION DES EFFORTS DE FROTTEMENT APPARAISSANT SUR UN OBJET EN MOUVEMENT DANS UN GUIDE SUR UN SITE INACCESSIBLE**

VERFAHREN ZUR BESTIMMUNG VON REIBUNGSKRÄFTEN, DIE AUF EIN OBJEKT IN EINER FÜHRUNG AN EINEM UNZUGÄNGLICHEN ORT EINWIRKEN

METHOD FOR DETERMINING FRICTION FORCES OCCURRING ON AN OBJECT MOVING IN A GUIDE ON AN INACCESSIBLE SITE

(84) Etats contractants désignés:
**BE DE GB SE**

(30) Priorité: **30.11.1999 FR 9915066**

(43) Date de publication de la demande:
**28.08.2002 Bulletin 2002/35**

(73) Titulaire: **COMMISSARIAT A L'ENERGIE ATOMIQUE**
**75015 Paris (FR)**

(72) Inventeur: **COLLARD, Bruno**
**F-04100 Manosque (FR)**

(74) Mandataire: **Poulin, Gérard et al**
**Brevalex**
**3, rue du Docteur Lancereaux**
**75008 Paris (FR)**

(56) Documents cités:
**EP-A- 0 206 877**     **DD-A- 250 201**
**US-A- 4 983 350**

- **SHINOHARA ET AL.: "behavior of an elastic rod falling into a vibrating circular cylinder" BULLETIN OF JAPAN SOCIETY OF MECHANICAL ENGINEERING, vol. 27, no. 226, avril 1984 (1984-04), pages 794-801, XP000861835**
- **BJÖRNKVIST ET AL.: "application of a semi-empirical rod drop model ..." PROCEEDINGS OF THE 1997 MEETING ON LWR PERFORMANCE, 1997, pages 81-89, XP000861854 la grange park (IL, USA)**

**Description**

Domaine de l'invention

L'invention ressortit de la mesure des efforts, notamment de frottement, agissant sur un objet en mouvement dans un guide et inaccessible à un opérateur. L'application principale de cette méthode est celle de la mesure des efforts agissant sur un ensemble mobile constitué de la tige de commande et de la grappe de barres de contrôle, appelée communément : « grappe de contrôle », intervenant dans l'assemblage de combustible d'un réacteur nucléaire à eau pressurisée.

Art antérieur et problème posé

L'activité neutronique d'un coeur de réacteur à eau pressurisée est modulée par l'utilisation commandée de grappes de contrôle s'introduisant par un mouvement de descente à travers les assemblages de combustible pour enrayer l'activité nucléaire. La sûreté des réacteurs à eau pressurisée repose donc, en partie, sur le bon fonctionnement des grappes de contrôle. Par exemple, un arrêt d'urgence du réacteur nucléaire nécessite la chute gravitaire des grappes de contrôle dans un laps de temps donné, de l'ordre de deux secondes, mais dépendant du type du réacteur. Chaque grappe descendant dans le coeur du réacteur par gravitation, cette course de l'ordre de quatre mètres étant freinée à son terme par un amortisseur.

Lors des opérations programmées et nécessaires d'entretien, à l'occasion d'un changement d'assemblages de crayons de combustible ou de grappes de contrôle, des essais sont nécessaires pour effectuer des mesures, afin de contrôler le fonctionnement de ces grappes de contrôle. En effet, un certain nombre de circonstances de fonctionnement, telles que la déformation des assemblages de combustibles, l'usure des guides de grappes de contrôle, la présence de corps étrangers, la déformation ou le gonflement de la grappe ou de la tige de commande, un débit trop important dans les assemblages de combustible, le débit transverse de l'eau dans le plénum, peuvent venir altérer la chute gravitaire des grappes de contrôle et ainsi accélérer ou retarder la chute de ces dernières, voire les bloquer. Il s'ensuit qu'il est donc nécessaire et essentiel de connaître en permanence les forces induites, parasitaires ou non, dans ces circonstances particulières ou dégradées, ainsi que leur positionnement le long de la trajectoire de chute.

Or, l'ensemble de ce mécanisme des grappes de barres de contrôle, de leur guide et de leur tige de commande se trouve dans l'enceinte même du coeur du réacteur et est donc inaccessible à des opérateurs humains. De même, les matériels, dont cet ensemble d'équipements du réacteur, sont installés dans cette enceinte. Il n'est donc pas possible de venir contrôler leur fonctionnement, de constater leur dégradation par une intervention humaine ou par un rapatriement du matériel à inspecter.

Un dispositif de mesure très couramment utilisé pour contrôler le déplacement des grappes de contrôle est un indicateur de position de barres (IPB), pouvant mesurer, soit un déplacement, soit une vitesse de déplacement. C'est dans la mesure des vitesses de déplacement que l'IPB est utilisé dans le cadre évoqué ci-dessus.

Il a été d'usage, jusqu'à la date de dépôt de la présente demande de brevet, de mesurer et d'enregistrer la vitesse de descente de la grappe et son ralentissement en fin de course. Lorsqu'une augmentation notoire du temps de ralentissement est constatée, d'après des critères prédéterminés, le changement du matériel défectueux est décidé. Des tests en laboratoire, non contaminés, peuvent aider à améliorer ces mesures et contrôles, mais ne peuvent pas reproduire les conditions exactes régnant dans l'enceinte du coeur du réacteur.

De plus, une mesure de l'évolution de la vitesse de chute (appelée « cinématique de chute ») reste approximative, au moyen de cette indicateur de position de barres (IPB).

Le but de l'invention est de remédier à ces inconvénients en mettant au point une méthode d'évaluation ou de détermination des efforts de frottement intervenant sur la descente d'une grappe de contrôle, cette méthode étant fiable pour gérer l'efficacité du fonctionnement des grappes de contrôle et éventuellement organiser les changements ou remplacements de celles-ci ou des assemblages de combustible. L'atteinte de ce but permettrait donc une meilleure gestion d'un coeur de réacteur à eau pressurisée.

Résumé de l'invention

A cet effet, l'objet principal de l'invention est une méthode de détermination des efforts de frottement apparaissant sur un objet en mouvement dans un guide, telle que définie dans la revendication 1.

L'application principale concerne la mesure de la chute d'un ensemble de barres de contrôle à l'intérieur d'un réacteur nucléaire à eau pressurisée, l'objet en mouvement étant un constitué d'une tige de commande et d'une grappe de contrôle, le capteur de vitesse étant un indicateur de position de barre et le guide étant le canal de chute.

Liste des figures

La méthode selon l'invention sera mieux comprise à la lecture de la description suivante, d'un mode de réalisation, accompagné de plusieurs figures représentant respectivement :

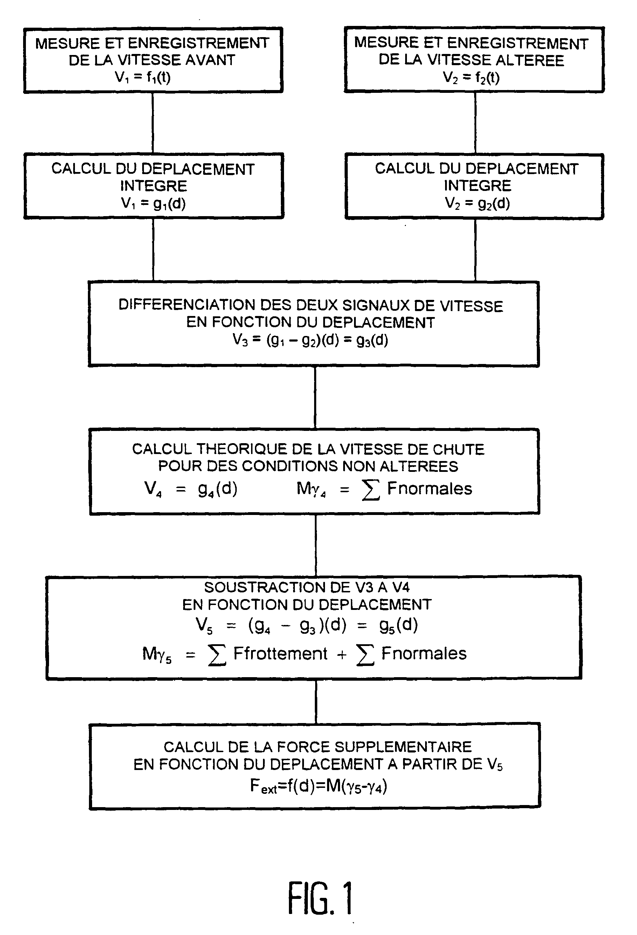

- figure 1, un ordinogramme des étapes de la méthode, selon l'invention ;
- figure 2, des courbes représentant l'évolution, en fonction du temps, du déplacement et de la vitesse d'un objet, permettant de comprendre la méthode selon l'invention ;
- figure 3, des courbes montrant l'évolution de la vitesse d'un objet en fonction du déplacement ; et
- figure 4, des courbes montrant l'évolution des forces en fonction de déplacement, évaluées par la méthode selon l'invention.

Description détaillée d'une réalisation de l'invention

La présente description de la méthode selon l'invention est faite dans son application à la mesure de la descente d'une grappe de contrôle dans un réacteur nucléaire à eau pressurisée. Le canal de chute est constitué des tubes guide, du guide de grappe, de la manchette thermique, d'un adaptateur, du carter de mécanisme et de la gaine de tige.
**L'étape n°1** de la méthode selon l'invention est une étape de mesure et d'enregistrement. Elle a lieu lors de la mise en marche du réacteur, c'est-à-dire avant l'utilisation des barres de contrôle. Le matériel est censé être parfaitement neuf et non usé, aucune force antagoniste, non prévue dans le mécanisme, ne venant perturber le fonctionnement de la grappe de contrôle. Cette mesure est donc une mesure de référence. On utilise, dans le cas présent, un indicateur de positions de barres IPB. Plus exactement, il est utilisé ici pour mesurer la vitesse instantanée de descente de l'ensemble en fonction du temps, c'est-à-dire $V_1 = f_1(t)$.
**L'étape n°2** est une étape de calculs sur la base de la mesure précédemment effectuée à l'étape 1. Elle consiste à calculer le déplacement intégré de l'évolution de la vitesse de l'objet avant l'apparition des frottements, $V_1(t)$, dans le but d'obtenir l'évolution de cette vitesse en fonction du déplacement d de l'ensemble mobile :

$$d_1(t) = \int_{u=0}^{t} V_1(u)\,du \; .$$

De cette équation, on en déduit alors la formule donnant la vitesse, en fonction du déplacement :

$$V_1 = g_1(d) \; .$$

Les deux étapes suivantes consistent à effectuer les étapes n°1 et n°2, mais après un certain temps de fonctionnement du réacteur nucléaire, quand des forces antagonistes de frottement, non souhaitées, sont apparues et influent sur le temps et la vitesse de descente de l'ensemble mobile de barres de contrôle.
Ainsi, **l'étape n°3** consiste à mesurer et à enregistrer, à l'aide d'un indicateur de position de barres IPB, la vitesse $V_2$ instantanée altérée, en fonction du temps, de la descente de l'ensemble mobile.
**L'étape 4** consiste alors à calculer le déplacement intégré de l'évolution de la vitesse de l'ensemble mobile à partir de la mesure effectuée de la vitesse instantanée $V_2(t)$. On obtient alors, par intégration, le déplacement :

$$d_2(t) = \int_{u=0}^{t} V_2(u)\,du \; .$$

On en déduit alors la vitesse de l'ensemble mobile en fonction du déplacement après apparition des forces de frottement, c'est-à-dire :

$$V_2 = g_2(d) \; .$$

**L'étape 5** permet de mettre en valeur la différence de vitesse de descente de l'ensemble mobile, avant et après l'apparition des forces de frottement supplémentaires. En effet, il suffit d'effectuer la différence de vitesse $V_3$ = $(V_1 - V_2)$ = $(g_1 - g_2)(d)$ = $g_3(d)$, en fonction du déplacement d. Pour effectuer ce calcul, il est nécessaire que le réacteur soit dans les mêmes conditions de fonctionnement.

Compte tenu du fait qu'on ne maîtrise pas vraiment le comportement de l'instrument de mesure, en l'occurrence l'indicateur de position de barres IPB, puisqu'il est installé dans une enceinte non accessible où aucune intervention humaine n'est possible, il a été décidé de n'utiliser celui-ci qu'après avoir effectué la différence, calculée à l'étape 5. On peut effectivement imaginer que cet instrument de mesure puisse avoir un comportement anormal et donner des signaux de mesure déformés. Il est fait allusion en particulier à des problèmes de transmission d'informations qui sont relativement constants, lorsque l'indicateur de position de barres est installé. Ces problèmes sont dus en particulier à la pression et aux températures. Par contre, on imagine que cette déformation propre à cet instrument de mesure est toujours du même ordre.

Ainsi, en n'utilisant que la différence des mesures effectuées avant et après l'apparition des forces de frottement, on s'affranchit d'un éventuel défaut de fonctionnement de l'IPB pour ne retenir que la variation des mesures effectuées avec cet appareil. En conséquence, conformément à **l'étape 6,** la grandeur de base de la vitesse de chute de l'ensemble mobile est calculée par un code de calcul prédéterminé, prenant en compte les conditions thermohydrauliques, mécaniques et dimensionnelles connues avant la mise en marche du réacteur nucléaire.

Bien entendu, ce code de calcul ne prend pas en compte les forces de frottements ultérieures au démarrage du réacteur, qui ne peuvent pas être prévues. Ce code de calcul donne donc la vitesse théorique de chute de l'ensemble mobile dans des conditions non altérées.

Le code permet donc d'obtenir l'évolution de la vitesse théorique de l'ensemble mobile $V_4 = g_4(d)$. On en déduit la somme des forces normales :

$$M\gamma_4 \; = \; \sum \texttt{forces normales.}$$

**L'étape 7** consiste à tenir compte des variations de vitesses mesurées dans les premières étapes et de l'incorporer au résultat calculé à l'étape précédente. Cela revient à soustraire à la valeur théorique de la vitesse, en fonction du déplacement, la différence calculée à partir des mesures :

$$V_5 = (g_4 \; - \; g_3)(d) \; = \; g_5(d).$$

On en déduit la somme des forces extérieures :

$$M\gamma_5 \; = \; \sum \texttt{forces normales} + \sum \texttt{forces de frottement supplémentaires}$$

**L'étape 8,** dernière étape, consiste à en déduire les forces extérieures $F_{ext}$ en fonction du déplacement f(d). On utilise, à cette occasion, l'équation fondamentale de la dynamique.

En utilisant l'équation du bilan des forces :

$$M\gamma_4 \; = \; \sum \texttt{forces normales}$$

$\Sigma$ forces normales = forces relatives à l'assemblage, forces relatives à la gaine, forces relatives au guide, autres forces.

Chaque force F est une fonction dépendant de la vitesse V, du déplacement d, de la géométrie du système, de la température $\theta$ et d'autres paramètres.

Avec :

$$M(\gamma_5 - \gamma_4) = \sum \text{forces de frottement supplémentaires.}$$

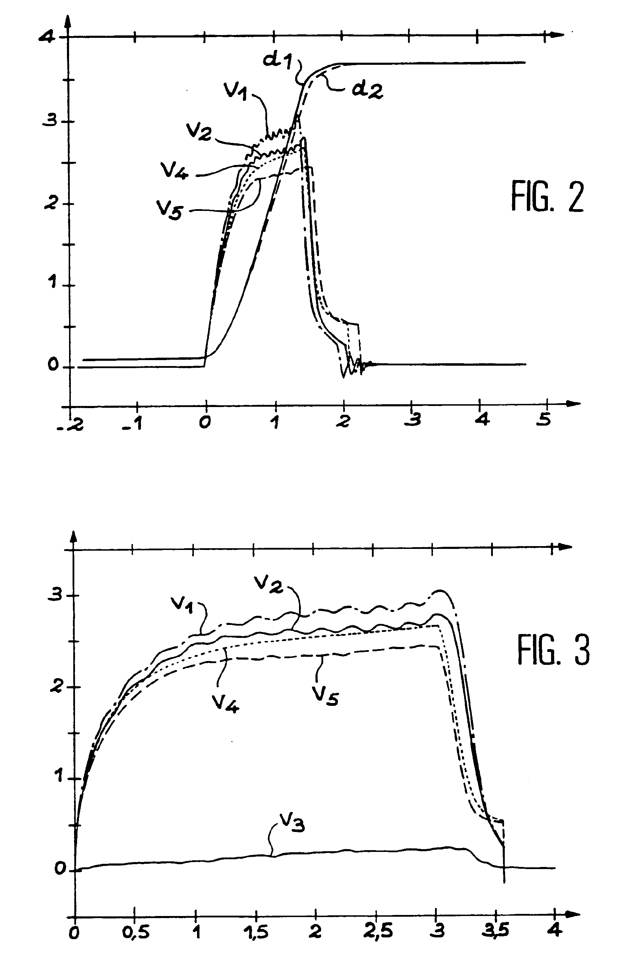

Les courbes représentées sur les figures 2, 3 et 4 permettent de mieux comprendre la démarche de la méthode selon l'invention.

Sur la figure 2, le temps est en abscisse, tandis que la vitesse et le déplacement sont tous les deux en ordonnée. Si l'on n'observe qu'une faible variation entre les deux courbes représentant le déplacement de référence $d_1$ et le déplacement altéré $d_2$, les variations de vitesses sont plus significatives. Concernant ces dernières, on observe que les deux vitesses mesurées $V_1$ et $V_2$ sont plus importantes que la vitesse calculée $V_4$ et que la vitesse obtenue en fin de méthode $V_5$. Bien entendu, on constate que la vitesse altérée $V_2$ est plus faible que la vitesse de référence $V_1$. De plus, on constate que cette différence entre $V_1$ et $V_2$ se reporte entre $V_4$ et $V_5$. D'ailleurs, cette différence $V_3$ de vitesse entre $V_1$ et $V_2$ figure sur le graphe que représente la figure 3, où les mêmes remarques sont applicables.

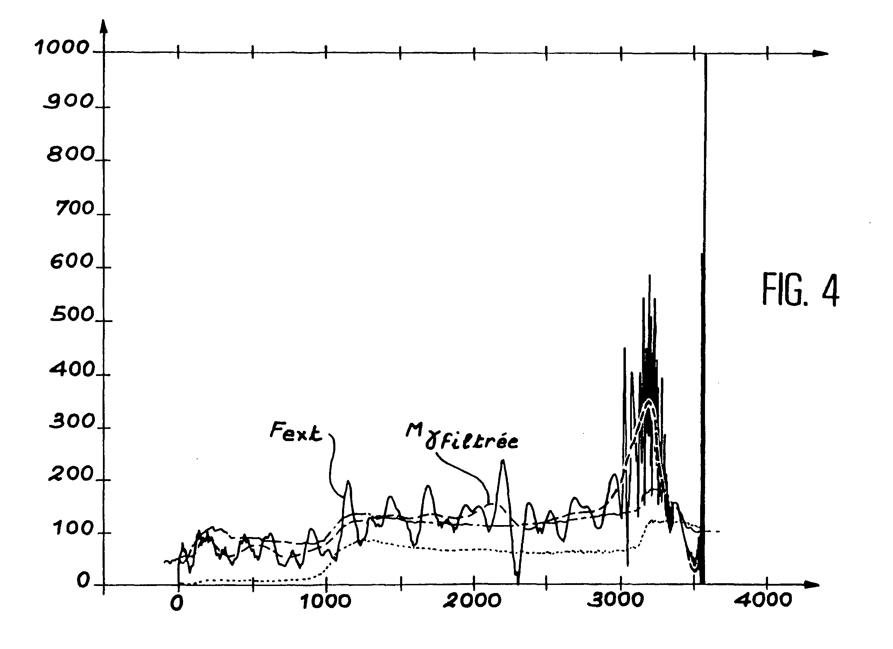

Sur la figure 4, représentant l'évolution des forces de frottement (en ordonnée), en fonction du déplacement (en abscisse), seules les deux courbes dont les variations sont les plus importantes sont à considérer. En effet, on y a figuré le résultat de la méthode selon l'invention, c'est-à-dire les forces supplémentaires de frottement calculées à la dernière étape de la méthode selon l'invention, l'étape 8, et ces mêmes forces supplémentaires de frottement filtrées. Les deux autres courbes concernent des forces mesurées.

## Revendications

1.   Méthode de détermination des efforts de frottement apparaissant sur un objet en mouvement dans un guide, au moyen d'un capteur de vitesse, comprenant les étapes suivantes :

   1) mesurer et enregistrer l'évolution de la vitesse de l'objet initialement avant l'apparition des frottements supplémentaires, c'est-à-dire à un moment où l'ensemble constitué par l'objet et le guide est censé être parfaitement neuf et non usé :

$$V_1 = f_1(t).$$

   2) calculer le déplacement intégré de l'évolution de la vitesse de l'objet avant l'apparition des frottements supplémentaires pour obtenir l'évolution de la vitesse $V_1 = g_1(d)$ en fonction du déplacement :

$$d_1(t) = \int_{u=0}^{t} V(u)du \;;$$

   3) mesurer et enregistrer révolution de la vitesse de l'objet après l'apparition des frottements supplémentaires, c'est-à-dire après une certaine durée d'utilisation du système constitué par l'objet et le guide :

$$V_2 = f_2(t) \;;$$

   4) calculer le déplacement intégré de l'évolution de la vitesse de l'objet de l'objet, après l'apparition des frottements supplémentaires, pour obtenir l'évolution de cette vitesse $V_2 = g_2(d)$ en fonction du déplacement :

$$d_2(t) = \int_{u=0}^{t} V_2(u)du \;;$$

   5) calculer la différence des deux vitesses en fonction du déplacement avant et après l'apparition des frottements

supplémentaires $V_3 = (g_1 - g_2)(d) = g_3(d)$;

6) calculer l'évolution de la vitesse de l'objet en fonction du déplacement, avant l'apparition des frottements supplémentaires, au moyen d'un programme de calculs établi à l'avance :

$$V_4 = g_4(d) \; ;$$

7) soustraire à cette évolution $V_4$ la différence des évolutions des vitesses mesurées $V_3$, $V_5 = V_4 - V_3 = g_5(d)$ ; et

8) en déduire par différentiation des vitesses $V_4$ et $V_5$ et multiplication par la masse M les forces supplémentaires de frottement extérieures intervenant sur l'évolution de l'objet $F_{sup} = M(\gamma_5 - \gamma_4) = f(d)$ où $\gamma_i = \dfrac{dV_i}{dt}$.

**2.** Méthode selon la revendication 1, apliquée à un réacteur nucléaire à eau pressurisée, l'objet en mouvement étant un ensemble mobile constitué d'une tige de commande et grappe de contrôle, le guide étant le canal de chute, le capteur de vitesse étant un indicateur de position de barres (IPB) utilisé en mesure de vitesse.

**Claims**

**1.** Method for determining friction forces occurring on a moving object in a guide, using a speed sensor, comprising the following steps:

1) measuring and recording changes in the Velocity of the object initially before the occurrence of supplementary friction, that is at a time when the assembly constituted by the object and the guide is supposed to be perfectly new and non used:

$$V_i = f_1 (t)$$

2) calculating distance of travel (d) with integrated change in velocity of the object before the onset of supplementary friction, to obtain the change in Velocity $V_1 = g_1(d)$ in relation to distance of travel:

$$d_1(t) = \int_{u=0}^{t} V(u)du \; ;$$

3) measuring and recording the change in velocity of the object after the onset of supplementary friction that is after a certain time of using of the assembly constituted by the object and the guide:

$$V_2 = f_2 (t);$$

4) calculating distance of travel with integrated change in velocity of the object, after onset of supplementary friction, to obtain the change in this velocity $V_2 = g_2(d)$ in relation to distance of travel:

$$d_2(t) = \int_{u=0}^{t} V_2 u(du) \; ;$$

5) calculating the difference between the two velocities in relation to travel before and after onset of additional friction $V_3 = (g_1 - g_2)(d) = g_3(d)$ ;

6) calculating the change in velocity of the object in relation to distance of travel, before the onset of supplementary friction, using a predetermined calculation programme:

$$V_4 = g_4(d);$$

7) subtracting from this change $V_4$ the difference $V_3$ in measured velocity changes, $V_5 = V_4 - V_3 = g_5(d)$ ; and
8) deducing, by differentiation between $V_4$ and $V_5$ and multiplication by the weight M, the additional friction forces acting on the movement of the object:

$$F_{additional} = M(\gamma 5 - \gamma 4) = f(d)$$

in which $\gamma_i = \dfrac{dV_i}{dt}$ .

2. Method according to claim 1, applied to a pressurized water nuclear reactor, the moving object being a mobile assembly formed of a control rod and control cluster, the guide being the lowering channel, the speed sensor being a rod position indicator (RPI) used to measure velocity.

**Patentansprüche**

1. Verfahren zur Bestimmung der auf ein sich in einer Führung bewegendes Objekt einwirkenden Reibungskräfte mit Hilfe eines Geschwindigkeitssensors, die folgenden Schritte umfassend:

1) anfängliches Messen und Aufzeichnen der Entwicklung der Geschwindigkeit vor dem Auftreten supplementärer Reibungen, das heißt zu einem Zeitpunkt, wo das durch das Objekt und die Führung gebildete System ganz neu und unbenutzt ist:

$$V_1 = f_1(t).$$

2) Berechnen der integrierten Verschiebung der Entwicklung der Geschwindigkeit des Objekts vor dem Auftreten der supplementären Reibungen, um die Entwicklung der Geschwindigkeit $V_1 = g_1(d)$ in Abhängigkeit von der Verschiebung zu erhalten:

$$d_1(t) = \int_{u=0}^{t} V(u)du ;$$

3) Messen und Aufzeichnen der Entwicklung der Geschwindigkeit nach dem Auftreten der supplementären Reibungen, das heißt nach einer bestimmten Benutzungsdauer des durch das Objekt und die Führung gebildeten Systems:

$$V_2 = f_2(t);$$

4) Berechnen der integrierten Verschiebung der Entwicklung der Geschwindigkeit des Objekts nach dem Auftreten der supplementären Reibungen, um die Entwicklung der Geschwindigkeit $V_2 = g_2(d)$ in Abhängigkeit von der Verschiebung zu erhalten:

$$d_2(t) = \int_{u=0}^{t} V_2(u)du \; ;$$

5) Berechnen der Differenz der beiden Geschwindigkeiten in Abhängigkeit von der Verschiebung vor und nach dem Auftreten der supplementären Reibungen $V_3 = (g_1 - g_2)(d) = g_3(d)$;

6) Berechnen der Entwicklung der Geschwindigkeit des Objekts in Abhängigkeit von der Verschiebung vor dem Auftreten der supplementären Reibungen mit Hilfe eines im Voraus erstellten Rechenprogramms:

$$V_4 = g_4(d);$$

7) Subtrahieren der Differenz der Entwicklungen der Geschwindigkeiten der gemessenen Geschwindigkeiten $V_3$ von dieser Entwicklung $V_4$, $V_5 = V_4 - V_3 = g_5(d)$; und

8) daraus durch Differenzieren der Geschwindigkeiten $V_4$ und $V_5$ und Multiplizieren mit der Masse M die auf die Entwicklung des Objekts einwirkenden äußeren supplementären Reibungskräfte ableiten

$$F_{sup} = M(\gamma_5 - \gamma_4) = f(d), \text{ wo } \gamma_i = dV_i/dt.$$

2. Methode nach Anspruch 1, angewendet bei einem Druckwasserreaktor, wobei das sich bewegende Objekt eine bewegliche Einheit ist, gebildet durch eine Betätigungsstange und ein Steuerstabbündel, wobei der Fallkanal die Führung bildet und der Geschwindigkeitssensor ein zur Geschwindigkeitsmessung benutzter Stabpositionsindikator (IPB) ist.

MESURE ET ENREGISTREMENT
DE LA VITESSE AVANT
$V_1 = f_1(t)$

MESURE ET ENREGISTREMENT
DE LA VITESSE ALTEREE
$V_2 = f_2(t)$

CALCUL DU DEPLACEMENT
INTEGRE
$V_1 = g_1(d)$

CALCUL DU DEPLACEMENT
INTEGRE
$V_2 = g_2(d)$

DIFFERENCIATION DES DEUX SIGNAUX DE VITESSE
EN FONCTION DU DEPLACEMENT
$V_3 = (g_1 - g_2)(d) = g_3(d)$

CALCUL THEORIQUE DE LA VITESSE DE CHUTE
POUR DES CONDITIONS NON ALTEREES
$V_4 = g_4(d) \qquad M\gamma_4 = \sum F\text{normales}$

SOUSTRACTION DE V3 A V4
EN FONCTION DU DEPLACEMENT
$V_5 = (g_4 - g_3)(d) = g_5(d)$
$M\gamma_5 = \sum F\text{frottement} + \sum F\text{normales}$

CALCUL DE LA FORCE SUPPLEMENTAIRE
EN FONCTION DU DEPLACEMENT A PARTIR DE V5
$F_{ext}=f(d)=M(\gamma_5-\gamma_4)$

FIG. 1

FIG. 2

FIG. 3

FIG. 4